# EUROPEAN PATENT APPLICATION

(11) **EP 4 576 785 A1**
(43) Date of publication of application: **25.06.2025**
(21) Application number: 24221291.8
(22) Date of filing: 18.12.2024
(51) Int. Cl.: H04N 21/234, H04N 21/2343, H04N 21/44

(54) **METHOD AND SYSTEM**

(30) Priority: 20.12.2023 GB 202319681
(71) Applicant: Sony Interactive Entertainment Europe Limited, London W1F 7LP (GB)
(72) Inventor: LEONARDI, Rosario, London, W1F 7LP (GB)
(74) Representative: Fish & Richardson P.C.

(57) **Abstract**

A method and system are provided which enable content to be streamed even with limited bandwidth. The method and system separate the pixels of a frame and transmit them in a way which means that the frame can be transmitted with a more efficient use of available bandwidth.

## Description

### FIELD

The invention relates to a method and system. Particularly, but not exclusively, the invention relates to a computer-implemented method and system. Particularly, but not exclusively, the invention relates to a computer-implemented method of streaming content.

### BACKGROUND

Content streaming is a commonly used method of consuming content such as television programs and video games. It enables content to be streamed on multiple devices and in multiple locations.

However, as there are more and more demands on network resources, it becomes more and more necessary to make better use of those resources if content streaming service are to be maintained and/or improved.

Aspects and embodiments were conceived with the foregoing in mind.

### SUMMARY

Aspects relate to streaming of content to a client device. Such content may comprise a video game or a television program or a movie. The client device is configured to provide a computer-implemented entertainment environment.

Viewed from a first aspect, there may be provided a computer-implemented method of streaming digital content to a computer-implemented entertainment environment. The computer-implemented entertainment environment may implemented using at least one client device. The client device may comprise any computing device such as, for example, mobile computing devices or desktop computing devices. The client device may comprise extended reality apparatus such as, for example, a virtual reality or augmented reality headset. The computer-implemented entertainment environment may be provided through the virtual reality or augmented reality headset.

The method may be implemented by a processing resource. The processing resource is any resource which can provide processing capacity and may be software or hardware implemented.

The method may comprise obtaining a frame associated with digital content to be streamed. The digital content may comprise a plurality of frames. The frame or plurality of frames may be obtained from storage or from a part external to the processing resource such as, for example, a content creator or developer. The frame or frames comprise a plurality of pixels which may be indexed using a combination of horizontal and vertical coordinates to identify where in the array of pixels the respective pixel is located. The pixels may additionally be identified using a colour value such as a grayscale value or respective red, green and blue coordinates (RGB values) for the respective pixel.

The method may further comprise identifying a first portion of the frame, wherein the first portion of the frame comprises a first plurality of pixels. The first portion does not encompass the frame. That is to say, the first portion is not the whole frame but only a portion of the frame.. The method may additionally comprise generating a frame identifier which can be used to identify the frame during the processing.

The first portion of the frame may be identified based on an image characteristic of the content within the frame. An image characteristic may describe a property of the visual aspects of the content contained within the image.

The method may further comprise transmitting the first portion of the frame to the client device in place of the frame as part of the streaming of the digital content..

A method in accordance with the first aspect enables a frame in a stream of digital content to be replaced with part of the frame selected based on image characteristics associated with visual aspects of the frame. This means that the bandwidth occupied by the stream can be reduced and more use can be made of available bandwidth.

The first portion may be identified by applying image segmentation to the image to segment objects from the image which satisfy the at least one image characteristic of the frame; and the first portion may be identified based on the presence of the segmented objects.

The application of the image segmentation may comprise the segmentation of the image to segment foreground or background images.

The image characteristic may comprise motion data associated with pixels of the frame.

The image characteristic may be based on at least one of luminosity and/or chromaticity values associated with pixels of the frame.

The first portion may be identified using a trained model which is trained to identify the first portion of the frame using the at least one image characteristic.

The at least one image characteristic may represent a part of a frame which is determined as being likely to be transmitted successfully.

The trained model may be trained to identify parts of an image.

The trained model may be trained to segment an image based on an image characteristic.

The trained model may comprise a convolutional neural network which is applied to the image content of the frame and trained to identify parts of the image content associated with the image characteristic.

The identification of the first portion may comprise the identification of a subset of the rows or columns of the frame.

The subset of the rows or columns may comprise respective even or odd numbered rows or columns.

In accordance with a second aspect, there may be provided a computer-implemented method of rendering digital content on a computing device, the method implemented by a processing resource. The processing resource is any resource which can provide processing capacity and may be software or hardware implemented.

The method may comprise receiving a first portion of a frame transmitted in accordance with the first aspect, wherein the portion of the frame may be received as part of a content stream of digital content.

The method may comprise associating the portion of the frame with a sequence of frames received as part of the content stream.

The method may comprise reprojecting the frame associated with the portion of the frame based on other frames in the sequence of frames and the portion of the frame.

The method may comprise rendering the digital content on the computing device.

The portion of the frame may be associated with the sequence of frames using a frame identifier which identifies the position of the associated frame in the stream of content.

The frame identifier may be received with the portion of the frame.

Reprojecting the frame may be based on previous frames in the sequence of frames.

Aspects may also provide systems and non-transitory storage mediums which can enable hardware to be configured to implement methods in accordance with any of the above aspects.

### DESCRIPTION

An embodiment will now be described by way of example only and with reference to the following drawings in which:
Figure 1 is a schematic illustration of system in accordance with an embodiment;
Figure 2 is a flow chart illustrating how content may be streamed in accordance with the embodiment;
Figure 3 is a schematic illustration of a pixel matrix;
Figure 4 is a flow chart illustrating how frames are rendered at the client device; and
Figure 5 is a schematic illustration of a client device which may stream content in accordance with the embodiment

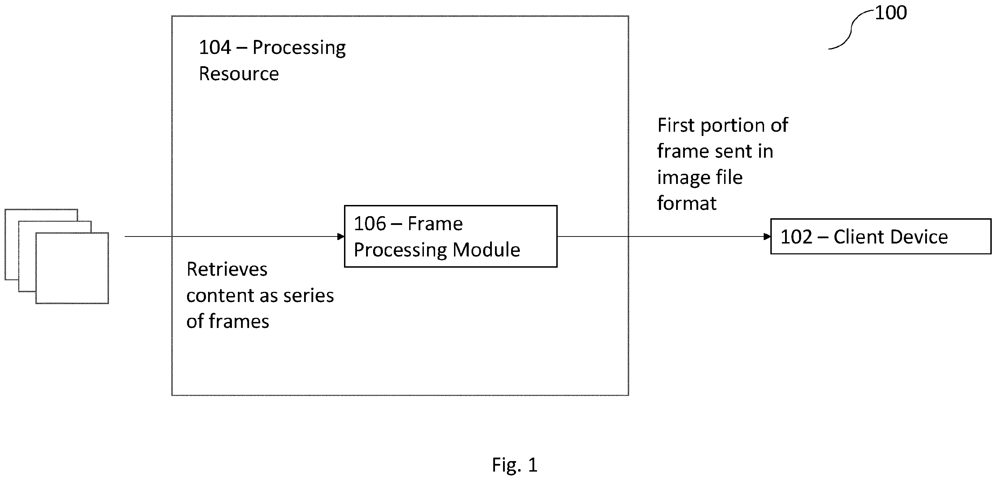

We now describe, with reference to Figure 1, a first embodiment of a system 100 which may be used to stream digital content into a computer-implemented entertainment environment implemented on a client device 102 from a processing resource 104. Example computer-implemented entertainment environments may include an instance of a video game or the streaming of a television show or movie.

The client device 102 may be any computing device which can be used to stream a video game, for example, and receive input from users through, for example, handheld controllers or other input means. The client device 102 may alternatively or additionally comprise an augmented reality headset or a virtual reality headset through which a corresponding computer-implemented entertainment environment may be viewed (or experienced). The client device 102 may be any computing device including mobile computing devices and may additionally comprise other multimedia devices such as cameras and microphones which may enable multimedia interaction with the computer implemented entertainment environment.

The client device 102 is configured to render the streamed digital content on receiving the digital content from the processing resource 104. The client device 102 may comprise a display on which the streamed and rendered digital content is displayed. The transmission from the processing resource 104 which is necessary to stream the content may be implemented using any suitable telecommunications medium or protocol such as, for example, the world-wide web. The client device 102 may be an augmented reality headset which is configured to implement an augmented reality environment which includes the rendered digital content.

The streamed digital content is transmitted to the client device 102 so that the streamed digital content can be displayed on the client device 102. The client device 102 may additionally transmit data to the processing resource 104 through any suitable telecommunications medium or protocol. This data may be in the form of a request for the digital content.

However, during times or gameplay within environments with limited bandwidth, it may become necessary to make more of the limited resources whilst still providing the computer-implemented entertainment environment. This may be because the client device 102 is based at a property with reduced network coverage or because the client device 102 is being used in an area of limited coverage.

Alternatively or additionally, game development may gather pace more quickly than the development of telecommunications infrastructure and so games with richer and richer levels of content may be produced before telecommunications networks can be configured to carry that content whilst still maintaining a satisfactory game play environment. It is therefore important to be able to deliver the content which supports the game play with reduced network resources.

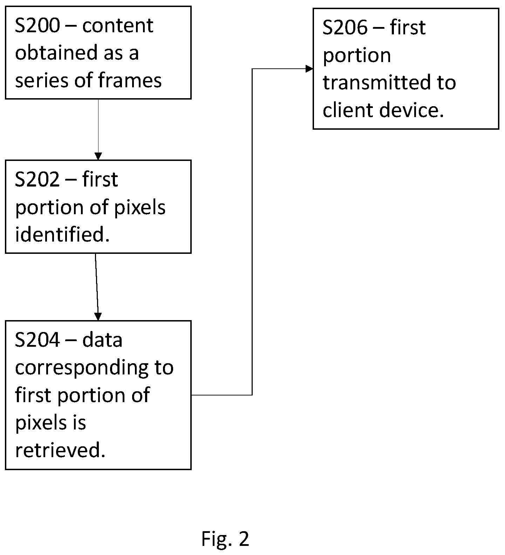

We will now describe, using Figure 2, how the streamed content may be streamed from the processing resource 104 to the client device 102 in accordance with the described embodiment.

As set out above, the client device 102 may be streaming content as a sequence of frames using a suitable telecommunications network or protocol. The processing resource 104 comprises a frame processing module 106 which is configured to obtain the digital content as a sequence of frames. This is step S200. The digital content may, for example, be obtained from storage or it may be received from a resource external to the processing resource 104 such as a digital content provider or a content distributor. The stream of digital content may comprise content which is used to implement a computer-implemented entertainment environment.

The frame processing module 106 (and the system 100) may be initialised responsive to poor network conditions such as insufficient bandwidth preventing the frames from being streamed in their usual form. The poor network conditions may include, for example, high latency or restrictions on available bandwidth. The initialisation of the frame processing module 106 may be automatic, responsive to the determination of the poor network conditions, or it may be initialised responsive to input from a system operator or a user of the client device 102.

On receiving the digital content as a sequence of frames, one of the frames in the sequence may be identified. This may be based on a specified frequency in that the frame processing module 106 may be configured to operate on all frames or it may be configured to operate on a selection of the frames. The selection may be determined by a system operator or a user of the client device 102. The selection may be determined by network conditions. The selection may, for example, determine that the frame processing module 106 selects every other frame or every four frames. On identifying the frame for processing using the frame processing module 106, the frame processing module 106 identifies a first portion of the pixels to determine the part of the selected frame which is going to be transmitted to the client device 102 as part of the stream of digital content.. This is step S202.

The frame processing module 106 may identify the first portion in a variety of ways, based on an image characteristic of the frame. An image characteristic relates to an aspect of the visual content of the frame. The frame processing module 106 may, for instance, apply image segmentation techniques to the frame in order to partition the image content of the frame into segments. A specific segment of the frame which matches the image characteristic may then be identified as the first portion. Standard approaches to segmentation may be used e.g. thresholding or clustering and motion based segmentation may also be used if data regarding motion in the image has been provided. Where motion based (or rigid motion) segmentation is used, portions of the image associated with moving objects may be identified as the first portion.

The segmentation of the image may segment the image into foreground or background images. The pixels corresponding to the respective foreground or background images may then be identified as the first portion. Additionally or alternatively, pixels corresponding to only one foreground or background object may be identified as the first portion by the application of image segmentation to the frame.

The segmentation of the image may also segment the image based on luminosity or chromaticity values associated with the pixels of the frame. Where luminosity based segmentation is applied, the first portion may correspond to a plurality of pixels with a luminance which exceeds a luminance threshold. In simpler terms, pixels which have a brightness of a red, blue or green component which exceeds a threshold may be identified as being the first portion. In simple terms, pixels corresponding to a brightly coloured car may be identified as having luminance values which would be identified by this process.

Where chromaticity based segmentation is applied, the first portion may correspond to a plurality of pixels where chromaticity values corresponding to red, blue or green components which exceed a threshold may be identified as being the first portion. In simple terms, pixels corresponding to a blue car where the blue is of very high quality may be identified by this process.

Motion based segmentation may be used to identify pixels corresponding to a moving object, such as, for example, a moving car.

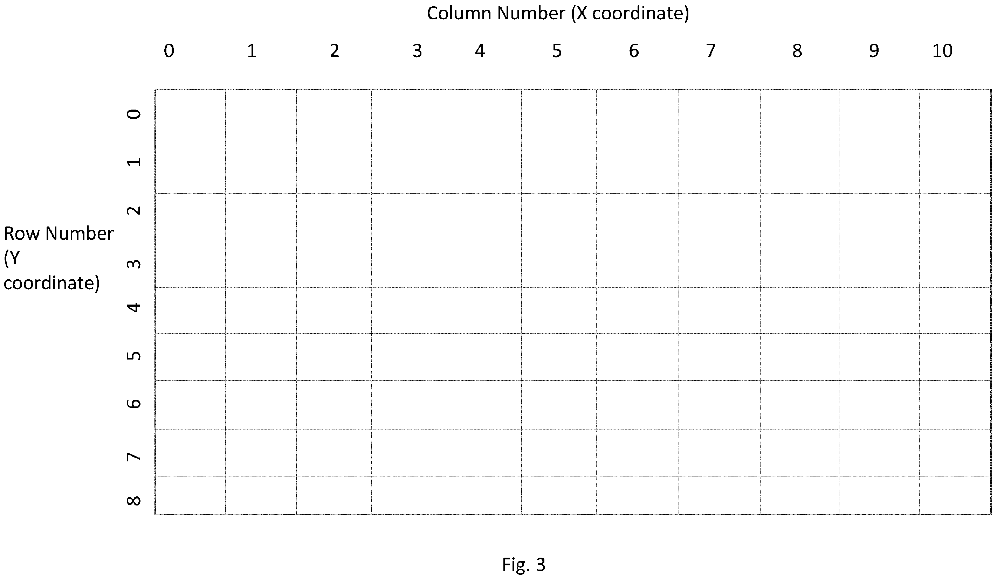

This identification of the first portion may comprise retrieving the data corresponding to the pixels in the even numbered rows of the pixel matrix (or alternatively the even numbered columns). The pixel matrix describes the arrangement of the pixels (in a frame) and is illustrated schematically in Figure 3 as a array of pixels which are each defined by a location (i.e. an X coordinate and a Y coordinate), RGB (Red Green Blue) values for the corresponding pixel. Alternatively or additionally, the pixels may be defined using the YCbCr space where luminosity and chromaticity occupy distinct planes. The luminosity values may be sent at higher resolution than chromaticity. The retrieval of this information, using whichever values are used for the pixels, is in step S204.

It is indeed to be understood that the frame illustrated in Figure 3 is for schematic purposes only is not intended to be limiting. The number of pixels in a frame and the number of rows and/or columns will be dictated by the resolution of that frame.

The characterisation of the first portion may be defined by a system operative and may be selected based on, for example, whichever is the most efficient to transmit in an image file format or network statistics indicating which portions of the frame are more likely to be distorted during transmission. Alternatively, pixels in the odd numbered rows or columns may be selected for the first portion. Alternatively, more than a single portion of the frame may be transmitted using an image file format.

The frame processing module 106 may additionally generate a frame identifier for each of the frames being processed. The frame identifier may correspond to the number of the frame in the sequence of the frame. For example, the first frame in the sequence may be given the number 1, the second frame the number 2 and so on. Alternatively, the frame identifier may comprise a hash of the content of the frame to provide a unique identifier for the frame. The hash may be based on the X and Y coordinates of each of the pixels concatenated with the RGB values (or YCbCr values) for the corresponding pixels.

The first portion of pixels is then transmitted to the client device 102 as part of the content stream in step S206. It is transmitted instead of the corresponding frame. As the first portion does not encompass the frame in that it is a portion of the frame, it consumes less bandwidth than transmission of the frame. This means that the content stream can be transmitted using less bandwidth than if entire frames were transmitted. The transmission of the first portion includes the frame identifier for the corresponding frame so that the first portion can be matched to the rest of the streamed content at the client device when the streamed content is rendered. The transmission can be implemented using any suitable transmission medium or protocol.

That is to say, the first portion of pixels is streamed instead of the whole frame. This makes better use of potentially limited network resources.. We will describe later how this can be used to render the content at the client device 102.

This means that, even in circumstances where bandwidth becomes limited, content can be streamed into a computer-implemented entertainment environment.

In examples where the content is, for example, a streamed movie or a television program, this means the content can be streamed to the client device with a reduced risk of bandwidth limitations impacting on the streaming experience. In another example, wherein the content is, for example, a video game, streaming the content in this way means that the gameplaying experience is less impacted by reduced bandwidth as the full amount of content can be transmitted to the client device using less bandwidth.

Alternatively or additionally, the identification of the first portion of pixels in step S202 may be executed using a trained model which is trained to identify pixels in an image which exhibit the image characteristic which has been identified as the characteristic on which the identification of the first portion of pixels should be based.

The trained model may deploy an artificial neural network (ANN) or a convolutional neural network (CNN), for example.

ANNs can be hardware - (neurons are represented by physical components) or software-based (computer models) and can use a variety of topologies and learning algorithms.

ANNs usually have three layers that are interconnected. The first layer consists of input neurons. Those neurons send data on to the second layer, referred to a hidden layer which implements a function and which in turn sends the output neurons to the third layer. There may be a plurality of hidden layers in the ANN. With respect to the number of neurons in the input layer, this parameter is based on training data.

The second or hidden layer in a neural network implements one or more functions. For example, the function or functions may each compute a linear transformation or a classification of the previous layer or compute logical functions. For instance, considering that the input vector can be represented as x, the hidden layer functions as h and the output as y, then the ANN may be understood as implementing a function f using the second or hidden layer that maps from x to h and another function g that maps from h to y. So the hidden layer's activation is f(x) and the output of the network is g(f(x))

CNNs can be hardware or software based and can also use a variety of topologies and learning algorithms.

A CNN usually comprises at least one convolutional layer where a feature map is generated by the application of a kernel matrix to an input image. This is followed by at least one pooling layer and a fully connected layer, which deploys a multilayer perceptron which comprises at least an input layer, at least one hidden layer and an output layer. The at least one hidden layer applies weights to the output of the pooling layer to determine an output prediction.

Either of the ANN or CNN may be trained using images of physical objects or image characteristics which may be identified or need to be identified in accordance with the method. The training may be implemented using feedforward and backpropagation techniques.

The image characteristic may be foreground or background components of an image. That is to say, the ANN or CNN may be trained to identify foreground or background objects in an image and identify these components in a frame in order to generate the first portion. For example, in order to identify a foreground object, the ANN or CNN may utilise motion vector information related to the frame to identify the part of the image which is moving. Similarly, the same motion vector information may be used to identify background objects by subtracting the foreground objects from the pixels in the image.

The ANN or CNN may also be trained to segment an image based on an image characteristic. For example the ANN or CNN may be trained to segment an image of a person or animal in an image using a technique such as, for example clustering, edge detection or thresholding.

The image characteristic which is used as the basis for selecting the first portion, in any case, may be determined by network characteristics or conditions. That is to say, the image characteristic may be determined by historical or current network behaviour indicating that parts of a frame are less susceptible to signal distortion than others. For example, it may be that, historically, data corresponding to the edge of frames is more likely to be transmitted unsuccessfully in highly nonlinear data transmission regimes. The trained model can then be trained to identify central portions of the frame as the first portion. This means than the edges of a frame are not transmitted as part of the first portion. In another example, it may be that network conditions indicate that packet loss is more likely (which leads to bad streaming performance). The trained model can then be used to identify only foreground objects for transmission as this reduces the bandwidth occupied by the frame and increases the available bandwidth for transmission, mitigating against packet loss (of the data packets corresponding to the frame) if the data is being transmitted using a transmission control protocol (TCP), for example.

The training of the ANN or CNN may be implemented using forward/backward propagation where parts of the image content of frames which are transmitted successfully are used as the basis of labelled input-output pairs. That is to say, the ANN or CNN is trained to identify the parts of an image which are likely to be transmitted successfully by using images which have previously been transmitted successfully or even just parts of those successfully transmitted images. The training may identify common network problems and then train the ANN or CNN to identify portions of an image by labelling the portions of an image which usually transmit successfully under those network conditions.

In perhaps simpler terms, the neural network, in whichever guise, can be trained to identify portions of a frame which transmit successfully in poor network conditions. Those portions can then be used to replace the frame when the poor network conditions are at play. The poor network conditions could be caused by unreliable internet, the location to which the digital content is being streamed, the network speed, degrading equipment forming part of the network.

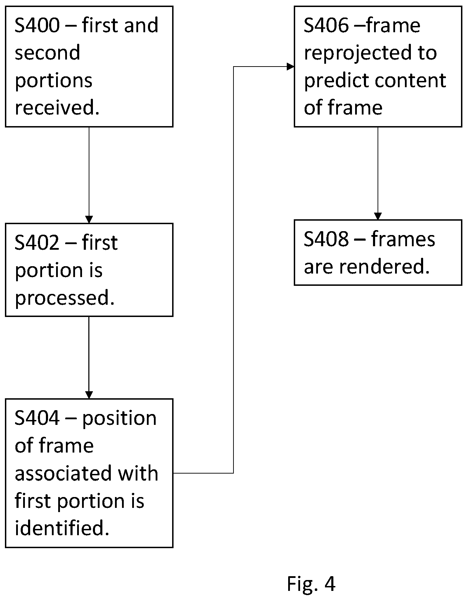

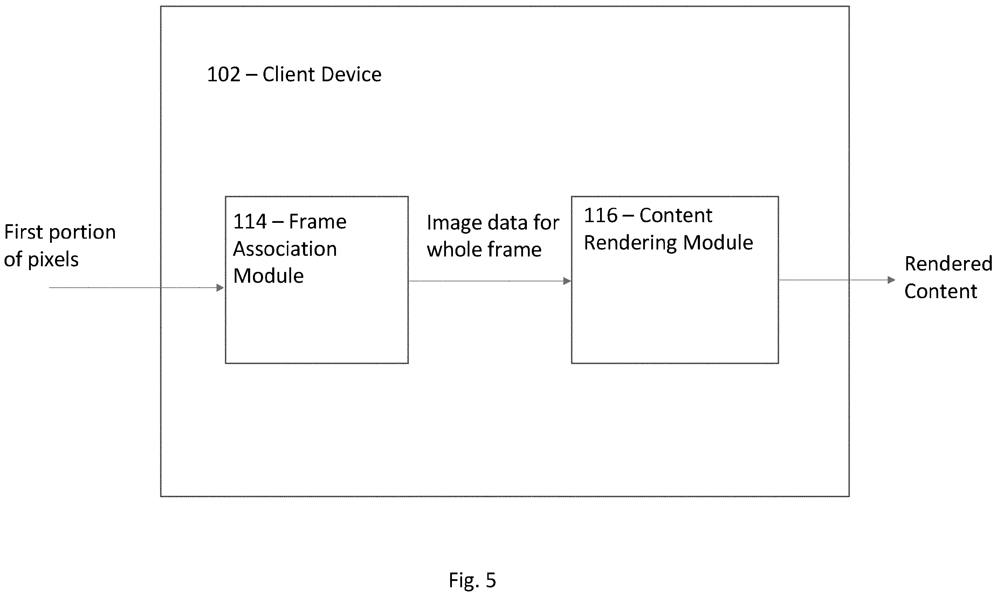

We will now describe, using Figure 4, how content streamed using the technique described with reference to Figure 2 can be rendered at the client device 102. An example of such a client device 102 is illustrated in Figure 5

The client device 102 comprises processing resources which are configured to implement a frame association module 112 and a content rendering module 114 The instructions needed to implement the frame association module 112 and the content rendering module 114 may be downloaded from the processing resource 104.

In a step S400, the first portion is received at the client device 102 from the processing resource 104 as part of a content stream. The frame identifier received with the portion may be used to identify where in the sequence of frames the frame corresponding to the first portion should be.

The frame identifier can then be used to reassociate the received first portion with the frames in the sequence of frames which make up the streamed content. This is step S404. That is to say, the position of the frame used to generate the first portion is identified so that the reprojection of the frame can be accurately implemented.

In a step S406, the frame association module utilises information from previous frames and the first portion to reproject the frame which was used to generate the first portion. That is to say, the frame which was used to generate the first portion is predicted based on the first portion and the previous frames.

The reprojected information regarding the frame can then be provided to the content rendering module 116 so that the content can be rendered on the client device 102. This is step S408.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as whole. In the present specification, "comprises" means "includes or consists of' and "comprising" means "including or consisting of". The singular reference of an element does not exclude the plural reference of such elements and vice-versa. The invention may be implemented by means of hardware comprising several distinct elements, and by means of a suitable programmed computer. In a device claim enumerating several means, several these means may be embodied by one and the same item of hardware. The mere fact that certain measures are recited in mutually different dependent claims does not indicate that a combination of these measures cannot be used to advantage.

## Claims

1. A computer-implemented method of streaming digital content to a computer-implemented entertainment environment implemented using at least one client device, the method implemented by a processing resource, the method comprising:
obtaining a frame associated with digital content to be streamed to a client device, the digital content comprising a plurality of frames;
identifying a first portion of the frame, wherein the first portion of the frame comprises a first plurality of pixels, wherein the first portion does not encompass the whole frame;
wherein the first portion of the frame is identified based on at least one image characteristic of the frame;
transmitting the first portion of the frame to the client device in place of the frame as part of the streaming of the digital content.

2. The method of Claim 1, wherein the first portion is identified by applying image segmentation to the image to segment objects from the image which satisfy the at least one image characteristic of the frame; and the first portion is identified based on the presence of the segmented objects and/or wherein the first portion is identified using a trained model which is trained to identify the first portion of the frame using the at least one image characteristic..

3. The method of Claim 2, wherein the application of the image segmentation comprises the segmentation of the image to segment foreground or background images; and/or
wherein the image characteristic comprises motion data associated with pixels of the frame; and/or
wherein the image characteristic is based on at least one of luminosity and/or chromaticity values associated with pixels of the frame.

4. The method of Claim 1, wherein the first portion is identified using a trained model which is trained to identify the first portion of the frame using the at least one image characteristic.

5. The method of Claim 4, wherein the at least one image characteristic represents a part of a frame which is determined as being likely to be transmitted successfully.

6. The method of Claim 4 or Claim 5 wherein the trained model is trained to identify parts of an image, optionally wherein the trained model is trained to segment an image based on an image characteristic.

7. The method of any one of Claims 4 to 6, wherein the trained model comprises a convolutional neural network which is applied to the image content of the frame and trained to identify parts of the image content associated with the image characteristic.

8. The method of any previous claims, wherein the identification of the first portion comprises the identification of a subset of the rows or columns of the frame.

9. The method of Claim 8, wherein the subset of the rows or columns comprises respective even or odd numbered rows or columns.

10. A computer-implemented method of rendering digital content on a computing device, the method implemented by a processing resource, the method comprising:
receiving a first portion of a frame transmitted in accordance with any one of Claims 1 to 9, wherein the portion of the frame is received as part of a content stream of digital content;
associating the portion of the frame with a sequence of frames received as part of the content stream;
reprojecting the frame associated with the portion of the frame based on other frames in the sequence of frames and the portion of the frame;
rendering the digital content on the computing device.

11. A method according to Claim 10, wherein the portion of the frame is associated with the sequence of frames using a frame identifier which identifies the position of the associated frame in the stream of content.

12. A method according to Claim 11, wherein the frame identifier is received with the portion of the frame.

13. A method according to any one of Claims 10 to 12, wherein reprojecting the frame is based on previous frames in the sequence of frames.

14. A system configured to implement the method of any one of Claims 1 to 16.

15. A non-transitory storage medium which, when run on a suitably configured device, implements the method of any of Claims 1 to 13.
